# EUROPEAN PATENT APPLICATION

(11) **EP 2 264 935 A2**
(43) Date of publication of application: **22.12.2010**
(21) Application number: 10182551.1
(22) Date of filing: 13.07.2004
(51) Int. Cl.: H04L 1/16

(54) **Transmitting data frames with less interframe space**

(30) Priority: 16.07.2003 US 487694 P; 15.12.2003 US 529589 P
(62) Divisional of application: 04744571.3
(71) Applicant: IPG Electronics 503 Limited, Les Banques St Peter Port Guernsey GY1 3DA (GB)
(72) Inventor: Del Prado Pavon, Javier, New York, NY 10510-8001 (US); Nandagopalan, Sai Shankar, New York, NY 10510-8001 (US)
(74) Representative: Mansfield, Peter Turquand

(57) **Abstract**

The present invention concerns an apparatus and a method for transmitting data frames with less or no Inter Frame Space (IFS) time in a wireless data network. The apparatus processes first and second data frames (11, 12, 21, 22, 23) for transmission over the wireless data network. The apparatus also transmits the first and second data frames (11, 12, 21, 22, 23) to a receiving apparatus over the wireless data network according to a wireless communication protocol. The second data frame (11, 12, 21, 22, 23) is transmitted at a time T after transmitting the first data frame (11, 12, 21, 22, 23), without the apparatus first receiving an ACK from the receiving apparatus. The time T is shorter than a Short IFS (SIFS) time specified by the wireless communication protocol.

## Description

This application claims priority to US Provisional Applications Serial Nos. 60/478,156 filed on June 12, 2003, and 60/487,694 filed on July 16, 2003, the entire disclosures of which are hereby incorporated by reference.

The present invention relates to data network transmission techniques, and in particular, to an optimized method for more efficiently transmitting data frames, in which the data frames are transmitted over a data network with less Inter Frame Space (IFS) time.

In data transmission, an ARQ (Automatic Retransmission Request) protocol specifies that each frame has to be acknowledged by the receiver with an ACK (Acknowledge) frame. This, however, reduces the efficiency of data transmission since the transmitter has to wait for receiving the ACK before it can send a next data frame. This is also true in a wireless data network using IEEE 802.11 protocol for MAC data frames transmission. To improve the efficiency, IEEE 802.11e defines a No ACK policy in which the frames are not acknowledged, and a Block ACK policy in which the frames are acknowledged in groups with a single Block ACK frame. These new policies considerably reduce the frame overhead and increase the efficiency.

Moreover, IEEE 802.11e has introduced the concept of transmission opportunity (TXOP). By this concept, the non-AP QSTA (non access point QoS enhanced station) and QAP (QoS enhanced access point) contend the medium for time, and once they get access to the channel they can hold the channel for the time specified by TXOPlimit and transmit multiple data frames with an inter frame space (IFS) time which is SIFS (Short IFS). IEEE 802.11e specifies that during a TXOPlimit, a non-AP QSTA/QAP may use the No ACK or Block ACK policy. By No ACK, each frame is transmitted and the ACK is not expected for that frame. If the TXOPlimit were larger than the single frame transmission time and if more frames are pending transmission at the MAC queue, the succeeding frames may be transmitted after SIFS time. Similarly, in the Block ACK policy, frames are transmitted successively with an inter frame space time SIFS before the transmission of the ACKs by the receiver.

This is, however, not optimized in terms of transmission efficiency since SIFS time is actually required only if the receiving non-AP OSTA/QAP were to return an acknowledgement as it includes the time to process the frame plus the receiver (RX) to transmitter (TX) turnaround time. In case of No ACK as well as Block ACK policies, it is not necessary to have the receiver wait for the SIFS time to transmit the ACK frame (except for the last frame in the block ACK policy after which the receiver must send an ACK to the transmitter).

Therefore, there is a need in the art for a method to more efficiently transmit data frames in a data network with less inter frame space (IFS) time.

According to the present invention, a method of transmitting data frames over a data network is provided, which comprises a step of sending the data frames from a transmitter to a receiver with an Inter Frame Space (IFS) time. In particular, the IFS does not include a time that the transmitter needs to change from a receiver state to a transmitter state. Preferably, the IFS only includes a time needed for the transmitter to detect ending of a frame and beginning of a next frame. Thus, the transmitter may transmit the data frames continuously with an IFS shorter than SIFS since it does not include the turnaround time.

The above and further features and advantages of the present invention will be clearer by reading the detailed description of preferred embodiment of the present invention, with reference to the accompanying drawings in which:
Figure 1 illustrates transmission of data frames with IFS between frames; and
Figure 2 illustrates that IFS is SIFS as required in the prior art.

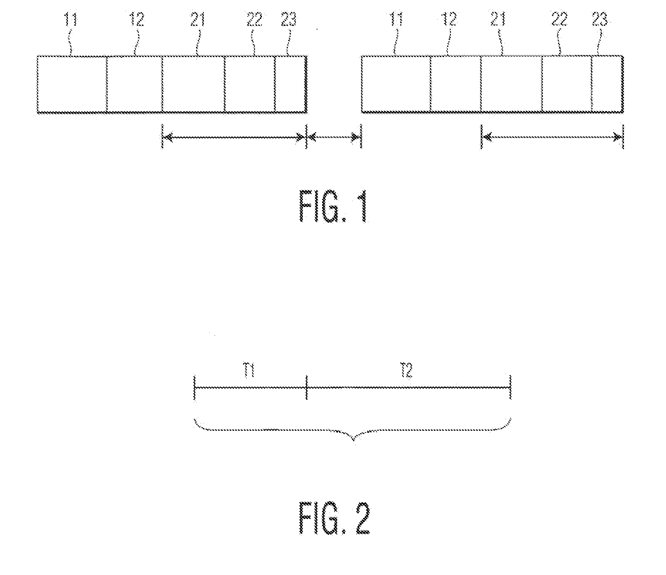

As illustrated in Figure 1, a data frame typically includes a physical layer control procedure (PLCP) overhead and a MAC data frame. The PLCP overhead comprises a PLCP preamble 11 and a PLCP header 12. The PLCP preamble 11 includes information mainly used for timing and synchronization functions and the PLCP header 12 mainly includes information about the length of the frame, the transmission rate, etc. The MAC data frame comprises a MAC header 21 portion including address information, etc., a MAC frame body portion 22 and a CRC (Cyclic Redundancy Check) portion 23, which is known as Frame Control Sequence (FCS) in the MAC layer.

When a transmitter continuously transmits sequential data frames to a receiver, an inter frame space (IFS) time is required between transmission of two sequential frames. Conventionally, this IFS time may be as short as SIFS (Short IFS) under No ACK and Block ACK policies adopted by IEEE 802.11e. As shown in Figure 2, SIFS includes a first portion of time T1 required for the transmitter to process a data frame, i.e., to detect the end of a frame and the start of a next frame, as well as a second portion of time T2, i.e., the "turnaround time" for the transmitter to change from a receiver state to a transmitter state. The SIFS time is a waste under No ACK and Block ACK policies as the transmitter does not need to receive the ACK from the receiver before it can continue to send the next data frame.

According to the present invention, under No ACK and Block ACK policies, the transmitter does not need to wait for SIFS to send a next data frame. In particular, frames that do not need an ACK immediately are transmitted continuously with an IFS which can be much shorter than SIFS. More specifically, the IFS time does not need to include the turnaround time T2 which otherwise is needed for the transmitter to change from the receiver state to the transmitter state, and only includes a time T1 needed for the transmitter to process the frame, i.e., to detect the end of the frame, and the beginning of the next frame. Therefore, data frames can be transmitted with an inter frame space much less than SIFS, thus considerably increasing the transmission efficiency.

Though the above has described the preferred embodiment of the present invention in detail, it shall be appreciated that, without departing the spirit of the present invention, various changes, adaptations and amendments are possible to a skilled person in the art. For example, though the preferred embodiment is described in a wireless data network using IEEE 802.11 protocol amended by IEEE 802.11e draft standard, it is understood that the present invention is not limited to a wireless data network environment. Thus, the protection scope of the present invention is intended to be solely defined in the accompanying claims.

The present invention also includes the following embodiments:
1. A method of transmitting data frames over a data network, comprising sending said data frames from a transmitter to a receiver with an Inter Frame Space (IFS) time, wherein said IFS does not include a time (T2) that said transmitter needs to change from a receiver state to a transmitter state.
2. The method of embodiment 1, wherein said IFS only includes a time (T1) needed for said transmitter to detect ending of a frame and beginning of a next frame.
3. The method of embodiment 2, wherein said transmitter is a non-QSTA (non QoS Enhanced Station) or a QAP (QoS Enhanced Access Point).
4. The method of embodiment 1, wherein said transmitter is not required to receive an ACK from said receiver before said transmitter sends out a next data frame.
5. The method of embodiment 1, wherein said transmitter only receives a block ACK which acknowledges plural of said data frames.
6. The method of embodiment 1, wherein said data network is a wireless data network using IEEE 802.11 protocol.
7. The method of embodiment 6, wherein said IEEE 802.11 is amended by IEEE 802.11e draft standard.
8. A method for a transmitter to send data frames to a receiver over a data network, wherein said transmitter sends said data frames with a time space (IFS) between transmission of two sequential data frames, wherein said time space (IFS) only comprises a time (T1) for said transmitter to process each of said data frames.
9. The method of embodiment 8, wherein said processing comprising detecting an end of a data frame and a start of a next data frame.
10. The method of embodiment 8, wherein said time space does not include a time (T2) that said transmitter needs change from a receiver state to a transmitter state.
11. The method of embodiment 8, wherein said transmitter is a non-QSTA (non QoS Enhanced Station) or a QAP (QoS Enhanced Access Point).
12. The method of embodiment 8, wherein said transmitter is not required to receive an ACK from said receiver before said transmitter sends out a next data frame.
13. The method of embodiment 8, wherein said transmitter only receives a block ACK which acknowledges plural of said data frames.
14. The method of embodiment 8, wherein said data network is a wireless data network using IEEE 802.11 protocol.
15. The method of embodiment 14, wherein said IEEE 802.11 is amended by IEEE 802.11e draft standard.

## Claims

1. An apparatus comprising:
means for processing first and second data frames for transmission over a wireless data network; and
means for transmitting the first and second data frames to a receiving apparatus over the wireless data network according to a wireless communication protocol,
wherein the means for transmitting transmits the second data frame, without the apparatus first receiving an ACK from the receiving apparatus, a time T after transmitting the first data frame, wherein the time T is shorter than a Short IFS (SIFS) time specified by the wireless communication protocol.

2. The apparatus of claim 1, wherein the wireless communication protocol is an IEEE 802.11 protocol.

3. The apparatus of claim 2, wherein the IEEE 802.11 protocol is as amended by IEEE 802.11e.

4. The apparatus of any one of claims 1 to 3, wherein each of the first and second data frames includes a header and a body.

5. The apparatus of any one of claims 1 to 3, wherein each of the first and second data frames includes a PLCP overhead and a MAC data frame.

6. The apparatus of any one of claims 1 to 5, wherein the apparatus is a non access point QoS enhanced station.

7. The apparatus of any one of claims 1 to 5, wherein the apparatus is a QoS enhanced access point.

8. The apparatus of any one of claims 1 to 7, wherein the means for transmitting transmits the first and second data frames during a transmission opportunity (TXOP).

9. The apparatus of any one of claims 1 to 7, wherein the means for transmitting transmits the first and second data frames during a TXOPlimit specified by the wireless communication protocol.

10. A method of transmitting data frames over a wireless data network, the method comprising:
processing first and second data frames for transmission over the wireless data network; and
transmitting the first and second data frames to a receiving apparatus over the wireless data network according to a wireless communication protocol,
wherein the step of transmitting transmits the second data frame, without the apparatus first receiving an ACK from the receiving apparatus, at a time T after transmitting the first data frame, wherein the time T is shorter than a Short IFS (SIFS) time specified by the wireless communication protocol.

11. The method of claim 10, wherein the wireless communication protocol is an IEEE 802.11 protocol.

12. The method of claim 11, wherein the IEEE 802.11 protocol is as amended by IEEE 802.11e.

13. The method of any one of claims 10 to 12, wherein the step of transmitting transmits the first and second data frames during a transmission opportunity (TXOP).

14. The method of any one of claims 10 to 13, wherein the step of transmitting transmits the first and second data frames during a TXOPlimit specified by the wireless communication protocol.
